# EUROPÄISCHE PATENTSCHRIFT

(11) **EP 1 878 534 B1**
(45) Veröffentlichungstag und Bekanntmachung des Hinweises auf die Patenterteilung: **11.03.2009**
(21) Anmeldenummer: 07021237.8
(22) Anmeldetag: 26.01.2007
(51) Int. Cl.: B23Q 1/52, B24B 7/04

(54) **Vorrichtung zum Ausrichten einer Werkzeugspindel mittels eines Scharniers**
Device for tilting a working spindle comprising a hinge
Dispositif pour orienter une broche porte-outil comprenant une charnière

(30) Priorität: 02.02.2006 DE 102006004747
(43) Veröffentlichungstag der Anmeldung: 16.01.2008
(62) Teilanmeldung aus: 07001794.2
(73) Patentinhaber: Supfina Grieshaber GmbH & Co. KG, 77709 Wolfach (DE)
(72) Erfinder: Hübner, Torsten, 42659 Solingen (DE)
(74) Vertreter: Dreiss, Fuhlendorf, Steimle & Becker

(56) Entgegenhaltungen:
- EP-A- 0 203 888
- US-A- 3 069 154
- US-A- 3 276 329
- US-A- 4 190 948

## Beschreibung

Bei einer Vielzahl von Werkzeugmaschinen erstreckt sich ein Werkstückaufspanntisch in einer Ebene, die von einer X-Achse und einer Y-Achse aufgespannt wird. Senkrecht dazu, das heißt in Richtung einer Z-Achse ist eine Werkzeugspindel angeordnet. Die Zustellbewegung der Werkzeugspindel verläuft ebenso wie eine Längsachse der Werkzeugspindel in Richtung der Z-Achse. Zum Beispiel sind Planschleifmaschinen oder Planfinishmaschinen häufig so aufgebaut.

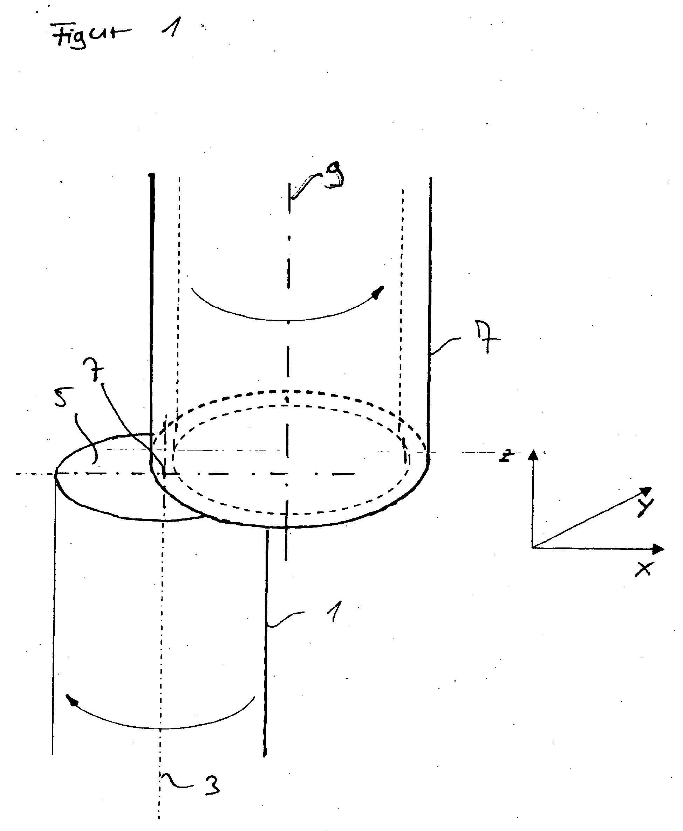

Im Folgenden wird anhand der Figuren 1 - 3 die wesentlichen geometrischen Verhältnisse zwischen Werkstück und Werkzeug beim Planschleifen beispielhaft erläutert.

Um die Verständlichkeit zu verbessern, wird im Folgenden stets unterstellt, dass die Zustellbewegung in Richtung der Z-Achse erfolgt und der Werkstückaufspanntisch in einer X-Y-Ebene verfahrbar ist. Es versteht sich jedoch von selbst, dass die Erfindung nicht auf den Einsatz an Werkzeugmaschinen dieser Art beschränkt ist. Vielmehr kann die Erfindung beispielsweise auch bei Werkzeugmaschinen mit horizontaler Ausrichtung der Werkzeugspindel eingesetzt werden.

In Figur 1 ist ein zylindrisches Werkstück 1 dargestellt, welches sich um seine Längsachse 3 im Uhrzeigersinn dreht. Gehalten wird das Werkstück 1 von einer Werkstückaufnahme, die in Figur 1 nicht dargestellt ist. Eine Stirnfläche 5 des Werkstücks 1 wird mit Hilfe einer Topfscheibe 7 bearbeitet. Die Drehachse der Topfscheibe 7 verläuft parallel zur Z-Achse.

Die Topfscheibe 7 ist an einer nicht dargestellten Werkzeugspindel befestigt und wird von einem ebenfalls nicht dargestellten Antrieb in eine dem Uhrzeigersinn entgegengesetzte Drehbewegung versetzt.

Damit die Stirnfläche 5 des Werkstücks 1 nach erfolgter Bearbeitung möglichst eben ist, sind mehrere Voraussetzungen zu erfüllen. Zunächst muss die Topfscheibe 7 einen Mittelpunkt 7 des Werkstücks 1 überschleifen. Um dies zu gewährleisten, ist es in der Regel erforderlich, dass die Topfscheibe 7 in Richtung der X-Achse relativ zu dem Werkstück 1 verfahrbar ist. Des Weiteren müssen die Längsachse 3 des Werkstücks 1 und eine Längsachse 9 der Topfscheibe 7 parallel zueinander verlaufen.

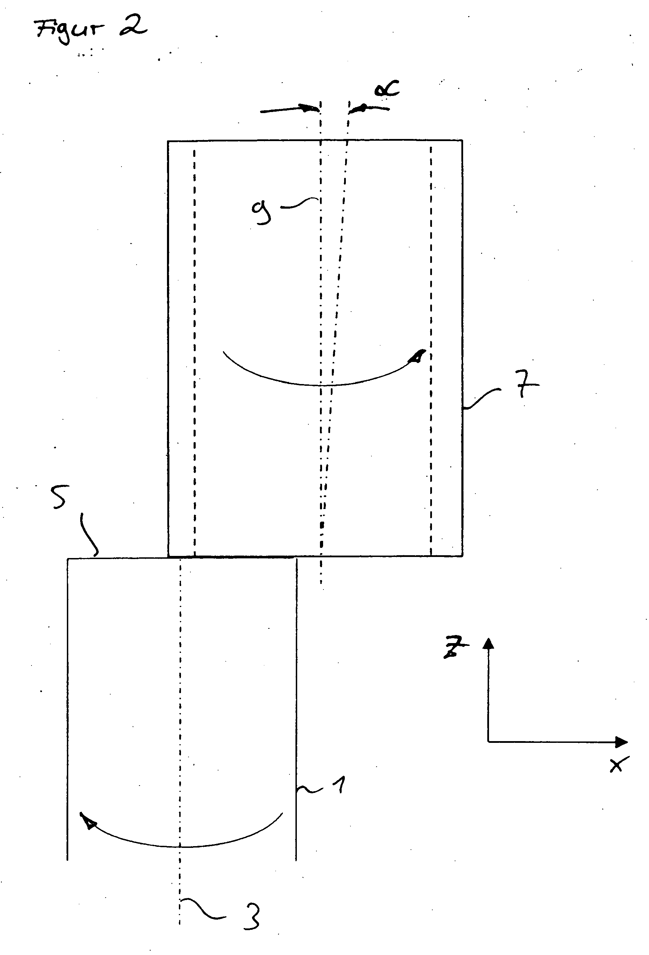

In Figur 2 ist eine Ansicht von vorne der in Figur 1 dargestellten Konfiguration dargestellt. Gleiche Bauteile werden mit den gleichen Bezugszeichen versehen und es gilt das bezüglich Figur 1 Gesagte entsprechend.

Die Vorderansicht gemäß Figur 2 zeigt eine X-Z-Ebene in dem Koordinatensystem gemäß Figur 1. In Figur 2 ist ein Neigungswinkel α dargestellt. Dieser Neigungswinkel α soll ein Verschwenken der Längsachse 9 der Topfscheibe 7 beziehungsweise ein Verschwenken der Längsachse der nicht dargestellten Werkzeugspindel, in welcher die Topfscheibe 7 drehbar gelagert ist, verdeutlichen. Der Neigungswinkel α beschreibt demzufolge ein Verdrehen oder ein Verschwenken einer Längsachse 9 der Werkzeugspindel in einer X-Z-Ebene. Durch gezieltes Verschwenken der Längsachse 9 der Werkzeugspindel kann die Planfläche 5 des Werkstücks eben, konkav oder konvex gestaltet werden.

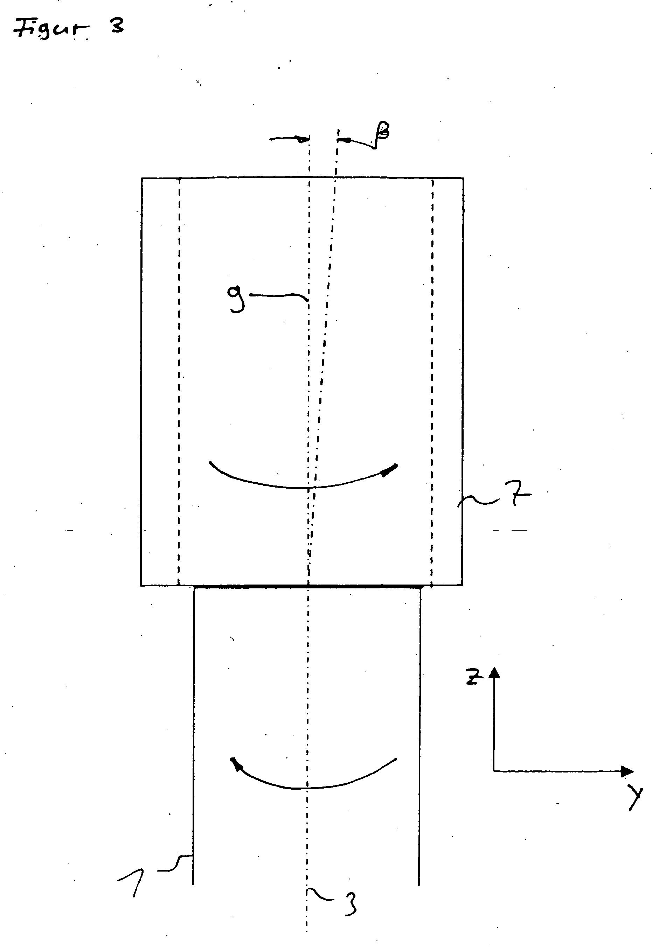

In Figur 3 ist eine Seitenansicht der in Figur 1 beschriebenen Konfiguration dargestellt. Die Figur 3 zeigt demzufolge eine Y-Z-Ebene. Um ein möglichst gleichmäßiges Schliffbild zu erhalten, ist es vorteilhaft, wenn die Längsachse 9 der Topfscheibe 7 und der Werkzeugspindel in der Y-Z-Ebene parallel zur Längsachse 3 des Werkstücks 1 verlaufen.

Wenn man jedoch das Schliffbild gezielt beeinflussen will, kann es auch vorteilhaft sein, die Längsachse 9 der Werkzeugspindel in der Y-Z-Ebene um einen Führungswinkel β relativ zur Längsachse 3 des Werkstücks 1 zu verdrehen oder zu verschwenken.

Der Neigungswinkel α und der Führungswinkel β sind in den Figuren 2 und 3 zur Veranschaulichung etwas vergrößert dargestellt.

Es versteht sich von selbst, dass die Lage, in der das Werkstück 1 und das Schleifwerkzeug 7 dargestellt sind, ebenso wie die Bezeichnung der Achsen nur beispielhaft für eine mögliche Ausführungsform sind. Selbstverständlich kann das Werkstück 1 auch ebenso wie die Topfscheibe 7 horizontal angeordnet werden, wenn dies gewünscht oder erforderlich sein sollte.

Insbesondere beim Planfinishen werden an die Geometrie der fertig bearbeiteten Stirnfläche eines Werkstücks extrem hohe Anforderungen gestellt. Diese Anforderungen betreffen sowohl die Ebenheit als auch das Schliffbild der fertig bearbeiteten Stirnfläche. Bei manchen Anwendungsfällen kann es auch erwünscht sein, dass die Stirnfläche nicht eben ist, sondern konkav oder konvex ist. Beispielsweise kann eine konkave Stirnfläche Vorteile bieten, wenn die Stirnfläche als Dichtfläche ausgebildet ist. Bei einer konkaven Stirnfläche ergibt sich dann nämlich am Außendurchmesser des Werkstücks eine Dichtkante mit lokal sehr hoher Flächenpressung, was die Abdichtung verbessert und teilweise erst möglich macht. Dies gilt besonders bei Bauteilen beziehungsweise Dichtungen, welche hohen Druckbelastungen ausgesetzt sind. Dies ist zum Beispiel bei Einspritzanlagen von Brennkraftmaschinen der Fall.

Die Anforderungen an die Geometrie und die Oberfläche der Stirnflächen von Werkstücken ist heutzutage oft so hoch, dass sie mit herkömmlichen Werkzeugmaschinen nicht erreichbar ist. Beispielsweise werden beim Planfinishen häufig Drehtische eingesetzt, auf denen beispielsweise vier Werkstückaufnahmen angeordnet sind. Durch Drehen des Drehtisches um 90° werden die in den Werkstückaufnahmen befindlichen Werkstücke von einer Bearbeitungsstation zu einer nächsten Bearbeitungsstation weiterbewegt. In einer ersten Bearbeitungsstation könnte beispielsweise die Werkstückaufnahme mit einem Werkstück beladen werden. In einer zweiten Bearbeitungsstation könnte ein Schruppen der Stirnfläche erfolgen, während in einer dritten Bearbeitungsstation das Schlichten der Stirnfläche vorgenommen wird. In einer vierten Bearbeitungsstation wird das Werkstück aus der Werkstückaufnahme entnommen.

Selbstverständlich wird bei solchen Drehtischen versucht, dass die Längsachsen der Werkstückaufnahmen genau parallel zueinander und exakt in Richtung der Z-Achse der Werkzeugmaschine verlaufen. Allerdings treten bei der Herstellung der Drehtische beziehungsweise der Werkstückaufnahmen Abweichungen von der idealen Ausrichtung der Werkstückaufnahmen auf, so dass in der Praxis die Werkstückaufnahmen eines Drehtisches nicht exakt parallel zueinander angeordnet sind, sondern kleine Abweichungen im Bereich von wenigen Winkelsekunden oder Winkelminuten. Diese Abweichungen führen jedoch im Ergebnis dazu, dass sich die Geometrie der Oberflächen der aus den vier verschiedenen Werkstückaufnahmen entnommenen Werkstücke hinsichtlich Schliffbild, Oberflächengüte und Geometrie unterscheiden. Dieser systematische Fehler kann dadurch eliminiert werden, dass die Werkzeugspindel auf die Werkzeugaufnahme ausgerichtet wird, die sich gerade im Bearbeitungsbereich der Werkzeugspindel befindet.

Der Neigungswinkel α und der Führungswinkel β können nicht nur zur gezielten Beeinflussung der Geometrie der Stirnfläche 5 und des Schliffbildes eingesetzt werden, sondern sie können auch dazu eingesetzt werden, um Fluchtungsfehler zwischen der Längsachse 3 des Werkstücks 1 und der Längsachse 9 der Werkszeugspindel in der Z-X-Ebene und/oder der Z-Y-Ebene zu kompensieren.

Dazu ist es erforderlich, beispielsweise die Fluchtungsfehler der Längsachsen von den Werkstückaufnahmen eines Drehtisches zu erfassen und in der Maschinensteuerung zu hinterlegen. Dann ist es möglich, die Längsachse 3 des Werkstücks und die Längsachse 9 des Bearbeitungswerkzeugs 7 mit Hilfe der erfindungsgemäßen Vorrichtung zum Ausrichten einer Werkzeugspindel in die gewünschte Relation zueinander zu bringen und somit optimale und reproduzierbare Bearbeitungsergebnisse zu erzielen. Durch die individuelle Kompensation der Fluchtungsfehler ist die erzielbare Genauigkeit bei der Bearbeitung nicht durch die Fluchtungsfehler limitiert.

Aus der US 4, 190, 948 ist eine Werkzeugmaschine nach dem Oberbegriff von Anspruch 1 bekannt bei der die Werkzeugspindel über ein Scharnier gelenkig mit dem Gestell verbunden ist. Mit Hilfe eines Kugelgewindeantriebs kann die Werkzeugspindel relativ zum Werkstück geschwenkt werden.

Der Erfindung liegt die Aufgabe zugrunde, Vorrichtungen zum Ausrichten und/oder Einstellen einer Werkzeugspindel bereitzustellen, die eine gezielte Steuerung der Geometrie der bearbeiteten Oberfläche (eben, konkav oder konvex) und die gezielte Beeinflussung Eigenschaften der Oberfläche (Schliffbild) ermöglichen. Außerdem sollen systematische Fehler der Werkzeugmaschine durch entsprechendes Ausrichten der Werkzeugspindel eliminiert werden.

Diese Aufgabe wird bei einer erfindungsgemäßen Vorrichtung zum Ausrichten einer Werkzeugspindel nach dem Oberbegriff des Anspruchs 1, dass die Mittel zum Drehen der ersten Platte relativ zur zweiten Platte zwei Keilstangen umfassen, dass jede der Keilstangen einer Keilfläche und eine Grundfläche aufweist, wenn die Keilflächen beider Keilstangen einander zugewandt angeordnet sind, dass die Grundfläche einer ersten Keilstange an der ersten Platte aufliegt und die Grundfläche einer zweiten Keilstange an der zweiten Platte aufliegt und die Keilstangen relativ zueinander verschiebbar sind.

Dadurch ist es möglich, die erforderlichen Kräfte über die gesamte Breite der ersten Platte und der zweiten Platte zu übertragen und ein Verwinden oder eine Verschränkung der ersten Platte oder der zweiten Platte durch die Betätigung der Mittel zum Drehen der ersten Platte wirkungsvoll zu verhindern.

Durch die Kombination aus einem Scharnier zwischen erster Platte und zweiter Platte und parallel dazu angeordneter erster Keilstange und zweiter Keilstange ergibt sich ein sehr stabiler und torsionssteifer Verbund, welcher die Stabilität und Genauigkeit einer mit der erfindungsgemäßen Vorrichtung ausgerüsteten Werkzeugmaschine nicht beeinträchtigt.

Um eine automatische Verstellung der ersten Platte relativ zur zweiten Platte zu ermöglichen, ist vorgesehen, dass mindestens eine der Keilstangen mittels eines Aktors relativ zu der anderen Keilstange verschiebbar ist. Bevorzugt ist es, wenn der Aktor eine Gewindespindel umfasst und die Gewindespindel mit einem Gewinde, insbesondere mit dem Gewinde einer Keilstange, zusammenwirkt. Dadurch ist es auf einfache Weise möglich, die erste Platte relativ zur zweiten Platte zu verdrehen und dadurch die Z-Achse der Werkzeugspindel relativ zu einer Längsachse 3 des Werkstücks zu verdrehen und einzustellen.

Es hat sich als vorteilhaft erwiesen, wenn die Gewindespindel von einem Elektromotor, insbesondere einem Schrittmotor, antreibbar ist. In vielen Fällen ist es weiter vorteilhaft, wenn zwischen Gewindespindel und Elektromotor ein Untersetzungsgetriebe, insbesondere ein Planetengetriebe, vorgesehen ist. Dadurch kann die Präzision der Stellbewegung verbessert und das übertragbare Drehmoment erhöht werden.

Damit das Scharnier zwischen erster und zweiter Platte möglichst große Kräfte übertragen kann und somit die Steifigkeit der Werkzeugmaschine nicht beeinträchtigt, ist vorgesehen, dass die erste Platte mindestens einen in Richtung der Drehachse des Scharniers verlaufenden ersten Absatz aufweist, dass die zweite Platte mindestens einen in Richtung der Drehachse des Scharniers verlaufenden zweiten Absatz aufweist und dass die erste Platte, der mindestens eine erste Absatz, die zweite Platte und der mindestens eine zweite Absatz mindestens einen prismatischen Scharnierkörper umschließen. Dadurch wird auf einfache Weise ein extrem belastbares Scharnier gebildet, das zudem spielfrei ist und auch im Laufe der Lebensdauer der Werkzeugmaschine kein Spiel entwickelt.

Der oder die Scharnierkörper können bevorzugt zylinderförmig sein, jedoch ist die Erfindung nicht auf zylinderförmige Scharnierkörper beschränkt. Alternativ wären auch beispielsweise quadratische Querschnitte möglich, wobei die Seitenkanten des quadratischen Querschnitts bevorzugt leicht gekrümmt sein können.

Um die Spielfreiheit zwischen erster Platte und zweiter Platte in jedem Betriebszustand zu gewährleisten, sind Federelemente vorgesehen, deren Federkräfte die erste Platte und die zweite Platte aufeinander zu bewegen.

Bevorzugt umfassen die Federelemente Druckfedern, insbesondere Tellerfedern oder Spiralfedern, und Spannschrauben. In montierten Zustand ragen die Spannschrauben durch die erste und die zweite Platte hindurch. Die Druckfedern stützen sich einenends gegen einen Kopf der Spannschrauben und anderenends gegen eine der Platten ab.

Es hat sich als vorteilhaft erwiesen, wenn mindestens ein Federelement im Bereich des Scharniers angeordnet ist und dieses mindestens eine Federelement die erste Platte, den mindestens einen ersten Absatz, die zweite Platte und den mindestens einen zweiten Absatz in Anlage an den mindestens einen prismatischen Scharnierkörper hält.

Des Weiteren hat es sich als vorteilhaft erwiesen, wenn mindestens ein Federelement beabstandet zu dem Scharnier angeordnet ist und dieses mindestens eine Federelement die erste Platte und die zweite Platte in Anlage an den Mitteln zum Drehen der ersten Platte relativ zur zweiten Platte halten.

Dadurch ist in allen Betriebzuständen und Einstellungen der erfindungsgemäßen Vorrichtung gewährleistet, dass sowohl das Scharnier spielfrei ist und Verschleiß im Bereich des Scharniers selbsttätig ausgeglichen wird. Des Weiteren wird erreicht, dass die erste Platte und die zweite Platte stets in Anlage an den Mitteln zum Drehen der ersten Platte relativ zur zweiten Platte gehalten werden und auch dadurch in diesem Bereich eine spielfreie Verbindung vorhanden ist.

Weitere Vorteile und vorteilhafte Ausgestaltungen der Erfindung werden nachfolgend im Zusammenhang mit der Zeichnung dargestellt und beschrieben. Alle in der Zeichnung, deren Beschreibung und den Patentansprüchen genannten Merkmale können sowohl einzeln als auch in beliebiger Kombination miteinander erfindungswesentlich sein.

Es zeigen:
- Figur 1: eine isometrische Darstellung eines Werkstücks und eines Schleifwerkzeugs,
- Figur 2: eine Vorderansicht der Konfiguration gemäß Figur 1 und
- Figur 3: eine Seitenansicht der Konfiguration gemäß Figur 1,
- Figur 4 und 5: isometrische Darstellungen Teile einer Werkzeugmaschine, die mit erfindungsgemäßen Vorrichtungen zum Ausrichten der Werkzeugspindel ausgerüstet ist,
- Figur 6: eine erste Vorrichtung zum Ausrichten einer Werkzeugspindel, die nicht in den Schutzumfang der vorliegenden Ansprüche fällt,
- Figur 7: ein Ausführungsbeispiel einer nicht erfindungsgemäßen Vorrichtung zum Ausrichten der Werkzeugspindel,
- Figur 8: einen Querschnitt durch die in den Figuren 4 und 5 dargestellten Werkzeugmaschine,
- Figur 9: einen Schnitt entlang der Linie A-A in Figur 8,
- Figur 10: einen Schnitt entlang der Linie B-B in Figur 8 und,
- Figur 11: einen Querschnitt durch die in den Figuren 4 und 5 dargestellten Werkzeugmaschine und
- Figur 12: ein Detail aus Figur 11.

### Beschreibung der Ausführungsbeispiele

Die Figuren 1 bis 3 wurden bereits in der Beschreibungseinleitung erläutert.

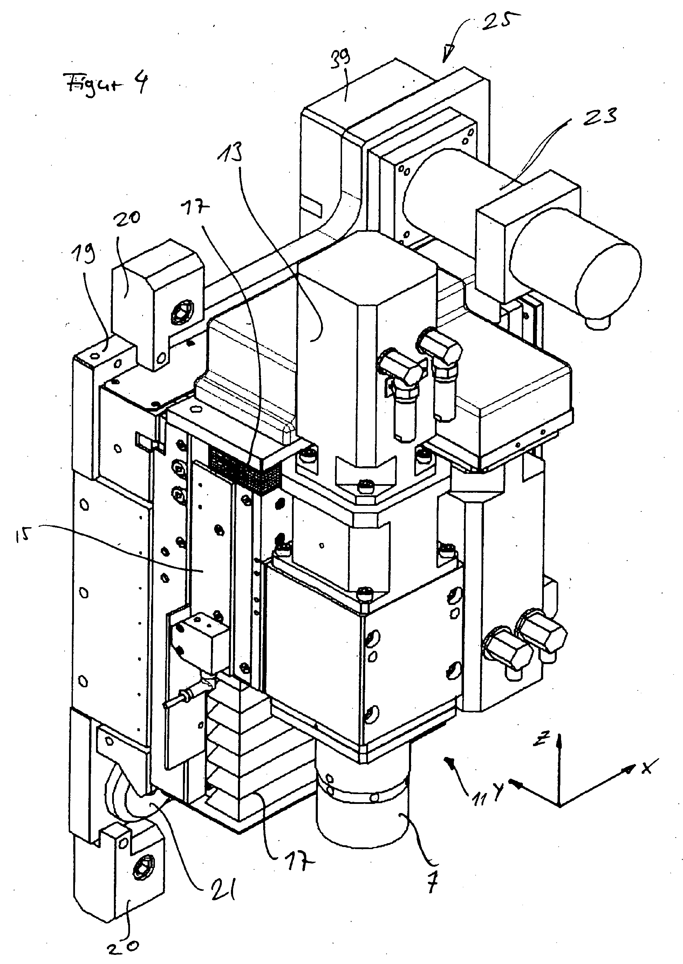

In Figur 4 ist ein Teil einer Werkzeugmaschine mit einer Werkzeugspindel 11 dargestellt. In dieser Werkzeugspindel ist die in den Figuren 1 bis 3 dargestellte Topfscheibe 7 oder ein anderes Werkzeug eingespannt.

Ein Antrieb der Werkzeugspindel 11 ist in Figur 4 mit dem Bezugszeichen 13 versehen. Die Zustellbewegung der Werkzeugspindel 11 in Richtung der Z-Achse erfolgt über eine Schlittenführung 15, die größtenteils durch Faltenbälge 17 abgedeckt ist.

Die Schlittenführung 15 ist mittelbar an einer Platte 19 befestigt. Die Platte 19 wird mit Hilfe von Spannpratzen 20 an einem nicht dargestellten Maschinengestell festgeklemmt.

In dem in Figur 4 links unten angeordneten Bereich der Platte 19 ist ein Lagerbolzen 21 ausgebildet, der nach hinten, das heißt in Richtung der positiven Y-Achse, über die Platte 19 hinausragt. Dieser Lagerbolzen 21 wird in einer Aufnahme des nicht dargestellten Maschinengestells aufgenommen. Der Drehpunkt der Platte 19 wird somit durch den Lagerbolzen 21 bestimmt.

In dem in Figur 4 rechts oben angeordneten Bereich der Platte 19 ist ein Exzenterantrieb 23 für einen Exzenter 25 an der Grundplatte 19 befestigt.

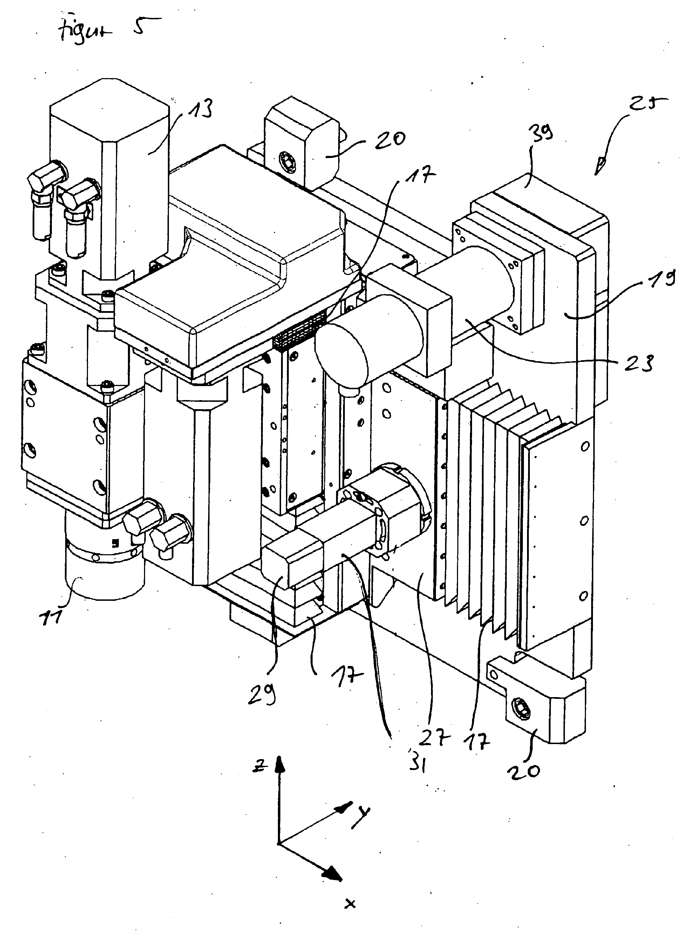

Die Figur 5 zeigt eine andere Isometrie der Werkzeugspindel gemäß Figur 4. Aus Figur 5 ist gut zu erkennen, dass zwischen der Werkzeugspindel 11 und der Platte 19 noch eine Schlittenführung 27 vorgesehen ist, so dass die Werkzeugspindel 11 in Richtung der X-Achse relativ zu dem nicht dargestellten Maschinengestell verfahrbar ist. Auch bei der Schlittenführung 27 wird ein Großteil derselben von einem Faltenbalg 17 verdeckt.

Ein Drehantrieb 29, der zum Verfahren der Werkzeugspindel 11 in Richtung der X-Achse dient, ist in Figur 5 gut sichtbar. An den Drehantrieb 29 ist ein Planetengetriebe 31 angeflanscht, welches zur Untersetzung der Drehzahl und zur Erhöhung des Drehmoments des Drehantriebs 29 dient. Der Drehantrieb 29 ist bevorzugt als elektrischer Schrittmotor ausgeführt.

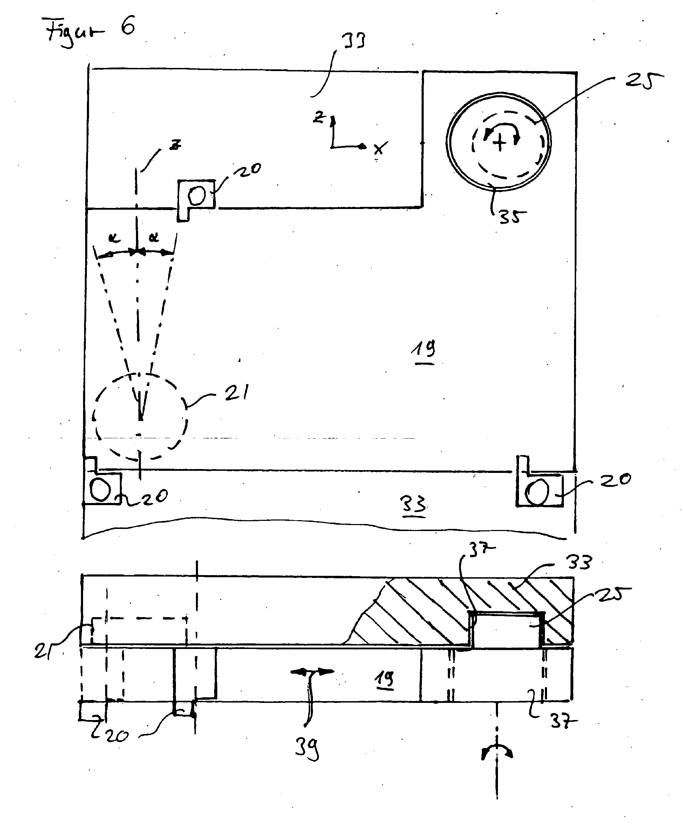

Ein vereinfachtes Ausführungsbeispiel einer Vorrichtung zum Ausrichten der Werkzeugspindel mit Hilfe eines Exzenters ist in Figur 6 dargestellt und wird nachfolgend erläutert. Für diese Vorrichtung wird mit dieser Patentanmeldung kein Schutz beansprucht.

In Figur 6 ist ein Maschinengestell 33, auf dem die Grundplatte 19 mittels der Spannpratzen 20 befestigt ist, sichtbar. Bei der Figur 6 sind lediglich die Grundplatte 19 ohne Werkzeugspindel 11 und die Schlittenführungen 15 und 27 dargestellt, um das erste Ausführungsbeispiel einer nicht erfindungsgemäßen Vorrichtung zum Ausrichten der Werkzeugspindel besser erläutern zu können.

Aus der Figur 6 wird deutlich, dass die Platte 19 mittels dreier Spannpratzen 20 an dem Maschinengestell 33 festgeklemmt ist. Diese Spannpratzen 20 können bei Bedarf gelockert werden, so dass ein Drehen der Platte 19 um den durch den Lagerbolzen 21 gebildeten Drehpunkt möglich ist. Es ist alternativ auch möglich, dass die Spannpratzen 20 eine Spannkraft ausüben, die einerseits so groß ist, dass ein ungewolltes Verdrehen der Platte 19 relativ zum Maschinengestell 33 nicht stattfindet und andererseits ein Verdrehen der Platte 19 mit Hilfe eines Exzenters möglich ist, ohne die Spannpratzen 20 zu lösen.

Rechts oben in Figur 6 ist eine einer Exzenterwelle 35 mit einem Exzenter 25 dargestellt. Die Exzenterwelle 35 ist drehbar in der Platte 19 gelagert, während der Exzenter 25 in ein entsprechendes Langloch 37 im Maschinengestell 33 eintaucht. Durch Drehen der Exzenterwelle 35 ist es möglich, die Platte 19 um den durch den Lagerbolzen 21 festgelegten Drehpunkt relativ zu dem Maschinengestell 33 zu verdrehen. Diese Drehbewegung ist in der Draufsicht im unteren Teil von Figur 6 durch einen Doppelpfeil 39 angedeutet.

Da die Drehbewegung der Platte 19 in der Z-Ebene erfolgt, entspricht bei diesem Ausführungsbeispiel die Drehbewegung in Figur 2 erläuterten Neigungswinkel α. Dieses Prinzip einer Verdrehung der Platte 19 relativ zum Maschinengestell ist bei dem in den Figuren 4 und 5 dargestellten Ausführungsbeispiel einer Werkzeugmaschine ebenfalls realisiert.

Um die Verstellung beziehungsweise Ausrichtung der Werkzeugspindel 11 vollautomatisiert und mit Hilfe der Maschinensteuerung durchführen zu können, ist bei dem Ausführungsbeispiel gemäß der Figuren 4 und 5 der Exzenterantrieb 23 vorgesehen. Bei dem Ausführungsbeispiel gemäß der Figuren 4 und 5 taucht der Exzenter 25 nicht direkt in ein Langloch des Maschinengestells 33 ein, sondern dieses Langloch ist in einem gesonderten Exzentergehäuse 39 (siehe Figuren 4 und 5) vorgesehen. Dieses Exzentergehäuse 39 wird mit dem nicht dargestellten Maschinengestell verschraubt.

Vorteilhaft an diesem Ausführungsbeispiel einer nicht erfindungsgemäßen Vorrichtung zum Ausrichten einer Werkzeugspindel ist, dass die Drehbewegung der Platte 19, die ja letztendlich zum Ausrichten der Werkzeugspindel 11 genutzt wird, um eine Achse erfolgt, die sich senkrecht zu der Platte 19 erstreckt. Bei dem in den Figuren 4 und 5 gezeigten Ausführungsbeispiel findet die Drehung um die Y-Achse statt, während die Platte 19 sich im Wesentlichen in der X-Z-Ebene erstreckt.

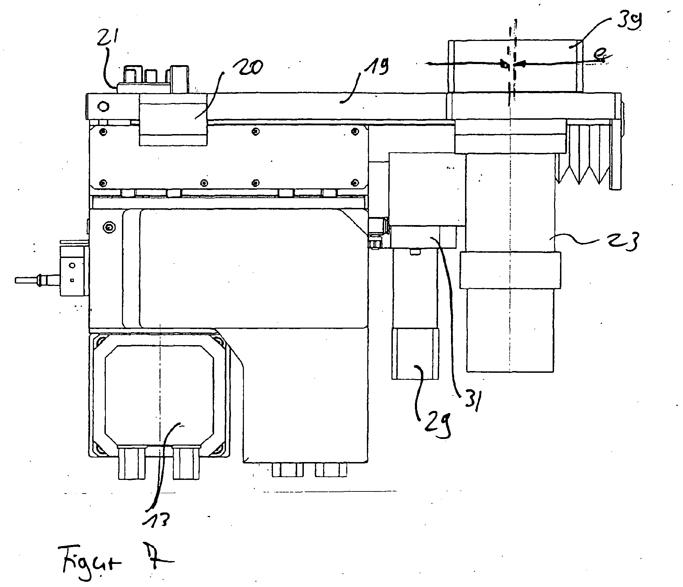

Figur 7 zeigt eine Draufsicht auf das Ausführungsbeispiel gemäß der Figuren 4 und 5, welche zur Verdeutlichung des Gesagten dient.

In der Figur 7 ist gut zu erkennen, dass der Lagerbolzen 21 über die Platte 19 hinausragt. Dieser Lagerbolzen 21 wird in einer entsprechenden Aufnahme in dem nicht dargestellten Maschinengestell aufgenommen und dient als Drehpunkt für die Platte 19. Im rechten Teil der Figur 7 sind der Exzenterantrieb 23 sowie das Exzentergehäuse 39 sichtbar. Eine Exzentrizität e zwischen einer Symmetrielinie des Exzenterantriebs 23 (ohne Bezugszeichen) und einer Symmetrielinie des Exzentergehäuses 39 ist zur Veranschaulichung in Figur 7 ebenfalls eingetragen.

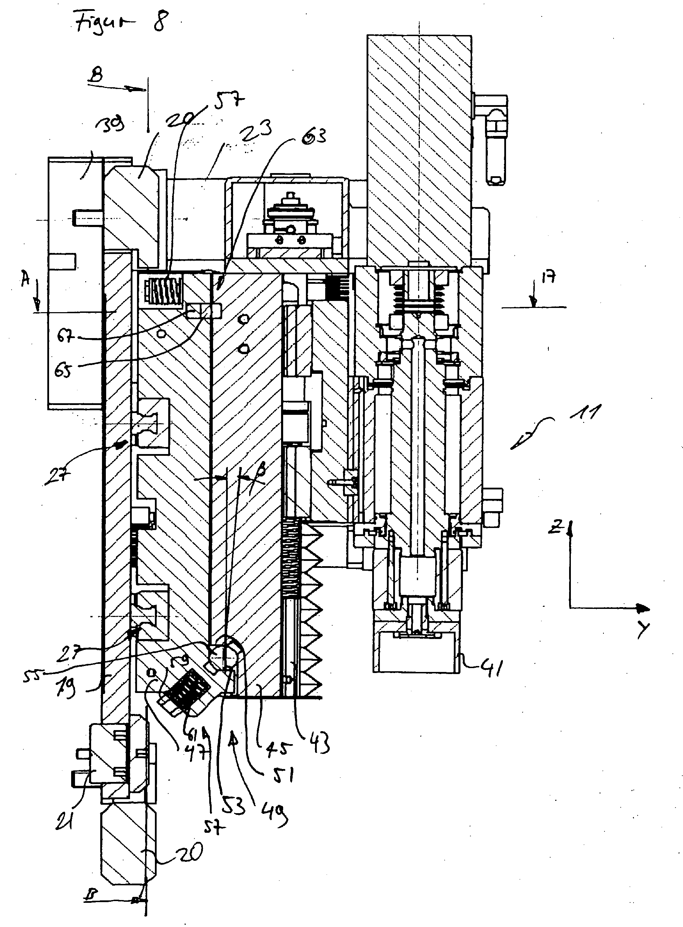

Figur 8 zeigt einen Schnitt in der Y-Z-Ebene durch die in den Figuren 4 und 5 dargestellte Werkzeugmaschine.

Anhand der Figur 8 wird deutlich, dass die Werkzeugspindel 11 auf einer Schlittenführung 15, die in Richtung der Z-Achse verläuft, verschiebbar ist. Über diese Schlittenführung und den nicht näher erläuterten Antrieb wird die Zustellbewegung der Werkzeugspindel 11 realisiert.

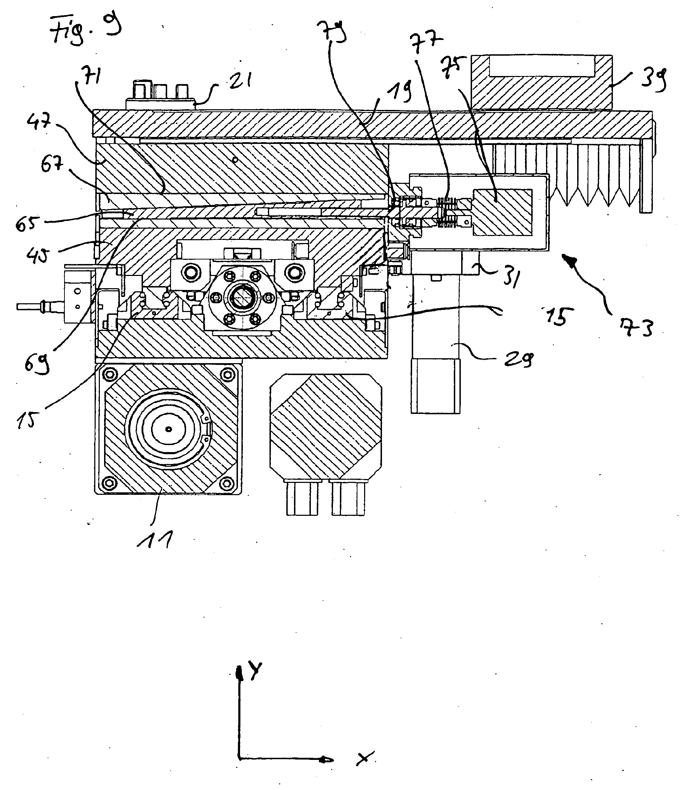

Zwischen der Schlittenführung 15 und der Platte 19 sind eine erste Platte 45, eine zweite Platte 47 und die Schlittenführung 27 in Richtung der X-Achse angeordnet. Die erste Platte 45 und die zweite Platte 47 bilden wesentliche Elemente der erfindungsgemäßen Vorrichtung zum Ausrichten einer Werkzeugspindel 11, die nachfolgend im Zusammenhang mit den Figuren 8 und 9 näher erläutert wird.

Die erste Platte 45 und die zweite Platte 47 sind durch ein Scharnier 49 drehbar miteinander verbunden. Die durch das Scharnier 49 gebildete Drehachse verläuft senkrecht zur Zeichnungsebene, das heißt in Richtung der X-Achse. Dadurch ist es möglich, um einen Führungswinkel β gegenüber der zweiten Platte 47 und damit auch gegenüber dem Maschinengestell (nicht dargestellt) in der X-Z-Ebene zu verdrehen beziehungsweise zu verschwenken.

Das-Scharnier 49 ist bei dem in Figur 8 im Schnitt dargestellten Ausführungsbeispiel wie folgt aufgebaut:

An der ersten Platte 45 ist ein erster Absatz 51 ausgebildet. Gegenüberliegend ist an der zweiten Platte 47 ein zweiter Absatz 53 ausgebildet. Die erste Platte 45 sowie der erste Absatz 51 auf der einen Seite und die zweite Platte 47 und der zweite Absatz 53 auf der anderen Seite umschließen einen oder mehrer hintereinander angeordnete zylinderförmige prismatische Scharnierkörper 55. Der Scharnierkörper 55 kann beispielsweise ein gehärteter zylindrischer Stahlbolzen sein, der sich in Richtung der X-Achse so weit erstreckt wie die erste Platte 45 und die zweite Platte 47 lang sind.

Alternativ ist es selbstverständlich auch möglich, mehrere Scharnierkörper hintereinander in Richtung der X-Achse anzuordnen. Zahl und Länge sowie Durchmesser der Scharnierkörper 55 ist in Abhängigkeit von den zu erwartenden Belastungen des Scharniers 49 auszuwählen und zu bemessen.

Damit das erfindungsgemäße Scharnier 49 spielfrei ist und sich auch durch Verschleiß kein Spiel zwischen der ersten Platte 45 und der zweiten Platte 47 bilden kann, sind mehrere Federelemente 57, von denen in Figur 8 nur eines sichtbar ist, über die Länge des erfindungsgemäßen Scharniers 49 angeordnet.

Die Federelemente 57 umfassen eine Spannschraube 59, von der nur der Kopf sichtbar ist, und mehrere Tellerfedern 61. Die Spannschraube wird durch eine Durchgangsbohrung (nicht dargestellt) in der zweiten Platte 47 hindurch gesteckt und in ein Innengewinde (nicht dargestellt) in der ersten Platte 45 eingedreht. Dort wo die Spannschraube 59 den Scharnierkörper 55 schneidet ist der Scharnierkörper 55 unterbrochen.

Die Spannschraube 59 wird so weit gegen die Tellerfedern 61 gedreht, bis die gewünschte Vorspannung erreicht wurde. Da das Spannelement 45 einen Winkel von etwa 45° mit den Anlageflächen des Scharnierkörpers 55 an der ersten und zweiten Platte 45, 47 sowie dem ersten und dem zweiten Absatz 51 und 53 einschließt, ist gewährleistet, dass der Scharnierkörper 55 stets an allen vier Anlageflächen anliegt und somit die Spielfreiheit sowohl in Richtung der Y-Achse als auch in Richtung der Z-Achse stets gewährleistet ist.

Um die erste Platte 45 relativ zur zweiten Platte 47 drehen zu können, sind im oberen Bereich der ersten Platte 45 und der zweiten Platte 47 Mittel zum Drehen der ersten Platte 45 relativ zur zweiten Platte 47 vorgesehen. Diese Mittel zum Drehen umfassen eine erste Keilstange 65 und eine zweite Keilstange 67. Die Funktionsweise dieser Keilstangen wird nachfolgend anhand der Figur 9 erläutert.

Die Figur 9 stellt einen Schnitt entlang der Linie A-A in Figur 8 dar. In dieser Schnittdarstellung ist die Schlittenführung 15 in Richtung der Z-Achse gut zu erkennen. Aus der Figur 9 wird deutlich, dass die erste Keilstange 65 in die erste Platte 45 eingebettet ist, während die zweite Keilstange 67 in die zweite Platte 47 eingebettet ist. Die Keilstangen weisen jeweils eine Grundfläche 69 und eine Keilfläche 71 auf. Mit ihren Grundflächen 69, 71 liegen die Keilstangen 65 und 67 in den entsprechenden Nuten (ohne Bezugszeichen) in der ersten Platte 45 beziehungsweise der zweiten Platte 47 auf. Die Keilflächen (ohne Bezugszeichen) der Keilstangen 65 und 67 liegen aufeinander auf, so dass die Grundflächen der Keilstangen 65 und 67 im Ergebnis parallel zueinander verlaufen und durch eine Relativbewegung der ersten Keilstange 65 zur zweiten Keilstange 67 der Abstand der Grundflächen 69 und 71 veränderbar ist.

In dem in Figur 9 dargestellten Ausführungsbeispiel ist die zweite Keilstange 67 fest mit der zweiten Platte 47 verbunden, während die erste Keilstange 65 durch einen Antrieb 69 in Richtung der X-Achse hin und her bewegbar ist. Der Drehantrieb 73 umfasst einen Schrittmotor 75, eine Kupplung 77 und eine Gewindespindel 79, die mit einem entsprechenden Innengewinde in der ersten Keilstange 65 zusammenwirkt. Durch Verschieben der ersten Keilstange 65 relativ zur zweiten Keilstange 67 kann der Abstand der ersten Platte 45 relativ zur zweiten Platte 47 auf Höhe der Keilstangen 65 und 67 verändert werden.

Im Zusammenwirken mit dem Scharnier 59 kann somit die gewünschte Drehbewegung der ersten Platte 45 relativ zu der zweiten Platte 47 erzielt werden.

Damit die erste Platte 45 und die zweite Platte 47 stets in Anlage an den Keilstangen 65 und 67 sind, ist auch im Bereich der Mittel zum Drehen der ersten Platte mindestens ein Federelement 57 vorgesehen. Dieses Federelement 57 arbeitet wie das im Bereich der Scharniere angeordneten Federelemente 57.

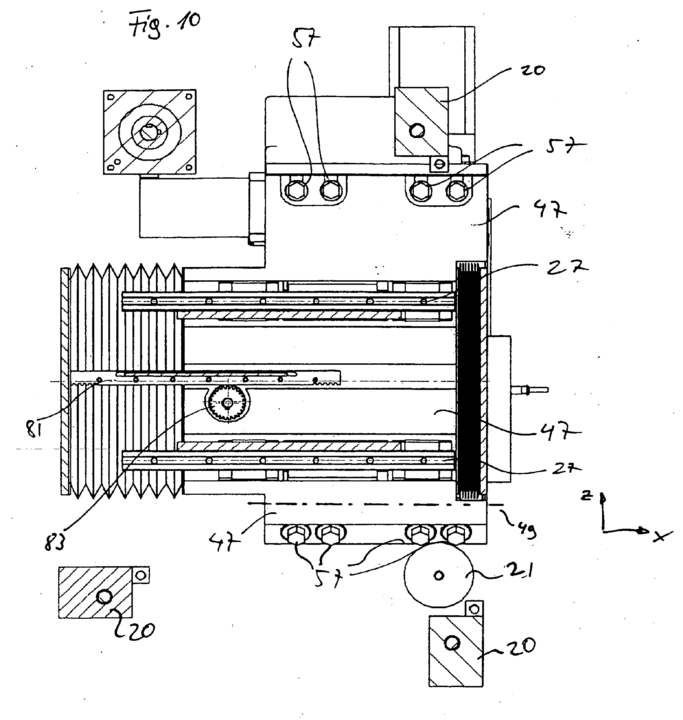

In Figur 10 ist ein Schnitt entlang der Linie B-B (siehe Figur 8) dargestellt. In dieser Darstellung, die quasi eine Ansicht von hinten auf die zweite Platte 47 darstellt, sind insgesamt acht Federelemente 57 gut zu erkennen. Vier der Federelemente befinden sich im Bereich des Scharniers 49, während die anderen vier Federelemente 57 im oberen Teil der zweiten Platte 47 im Bereich der Keilstangen angeordnet sind.

In dem Schnitt gemäß Figur 10 sind die Führungen 27 in Richtung der X-Achse, welche zwischen der Platte 19 und der zweiten Platte 47 angeordnet sind, gut zu erkennen. Zwischen den beiden Schlittenführungen 27 ist eine Zahnstange angeordnet. Die Zahnstange 81 ist fest mit der Platte 19 (nicht sichtbar in Figur 10) verschraubt. In der zweiten Platte 47 ist ein Ritzel 83 aufgenommen, welches mit der Zahnstange 81 kämmt. Dieses Ritzel 83 ist entweder drehbar in der zweiten Platte 47 oder der ersten Platte 45 gelagert, so dass durch Drehen des Ritzels 83 die erste Platte 45, die zweite Platte 47 und mit ihnen auch die Werkzeugspindel 11 in Richtung der X-Achse verschiebbar ist.

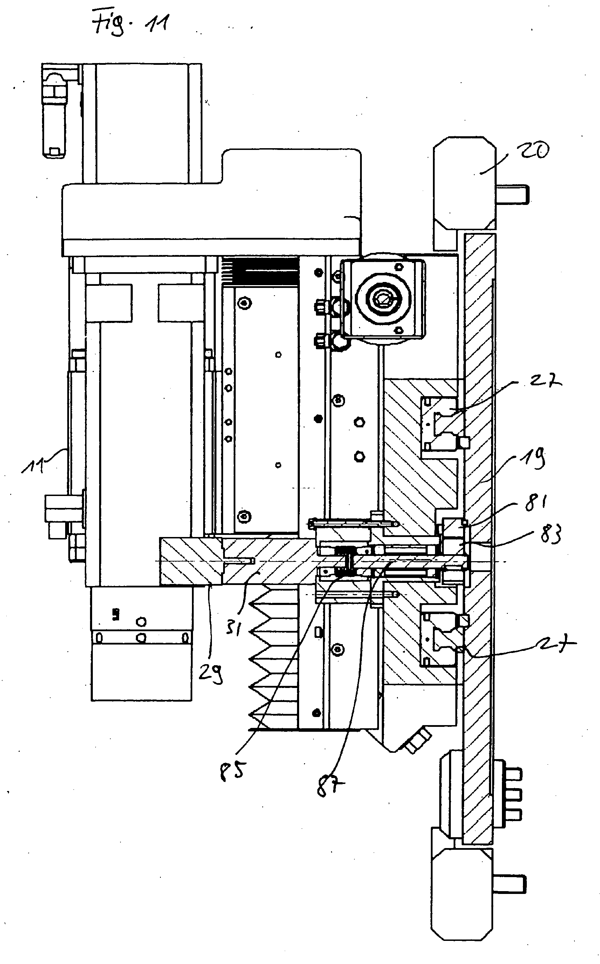

In Figur 11 ist ein Schnitt durch den Antrieb des Ritzels 83 dargestellt. Aus der Figur 11 ist ersichtlich, dass der Drehantrieb 29 und das Planetengetriebe 31 über eine Kupplung 85 mit einer Ritzelwelle 87, auf welcher das Ritzel 83 drehfest befestigt ist, verbunden sind. Somit ist es möglich, durch geeignetes Ansteuern des Schrittmotors 29 die Werkzeugspindel 11 in Richtung der X-Achse zu verfahren. Dies ist beispielsweise erforderlich, wenn der Durchmesser der Topfscheibe 7 verändert wird und die Topfscheibe 7 den Mittelpunkt 8 der Stirnfläche 5 des Werkstücks überstreichen soll (siehe Figur 1).

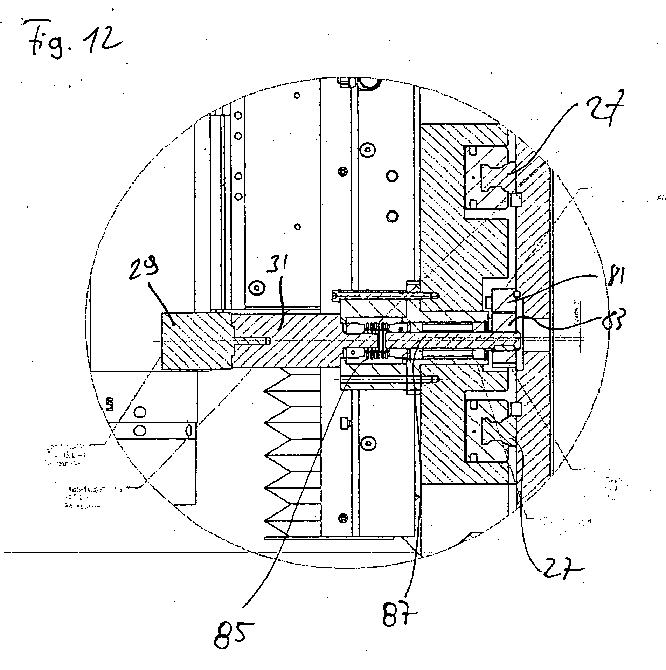

Figur 12 zeigt eine vergrößerte Darstellung des Ritzelantriebs.

Im Ergebnis bleibt festzuhalten, dass durch die erfindungsgemäßen Vorrichtungen zum Ausrichten der Werkzeugspindel 11 für jede Bauraumsituation eine Möglichkeit bereitgestellt wird, die Werkzeugspindel zu verschwenken.

Die erste Ausführungsform, die nicht der beanspruchten Erfindung entspricht, basiert auf einem Lagerbolzen 21 und einem Exzenterantrieb und führt dazu, dass die Platte 19 und mit ihr die Werkzeugspindel 11 eine Drehbewegung um eine Achse macht, die senkrecht zu der Platte 19 verläuft.

Bei dem erfindungsgemäßen zweiten Ausführungsbeispiel sind zwei Platten 45 und 47 an einer Kante über ein Scharnier miteinander verbunden. Durch Verdrehen dieser beiden Platten gegeneinander kann eine Drehbewegung um eine Drehachse erfolgen, die parallel zu den Platten verläuft.

Beide Vorrichtung können, wie es die Figuren 4 bis 11 belegen, auf engstem Bauraum und nahezu ohne Totvolumen miteinander kombiniert werden. Dadurch können in einer Werkzeugmaschine sowohl der Neigungswinkel α als auch der Führungswinkel β eingestellt werden.

Damit ist es möglich, Fertigungsungenauigkeiten bei der Werkzeugaufnahme beziehungsweise einem Rundtisch, auf dem die Werkzeugaufnahmen angeordnet sind, auszugleichen und sowohl die Geometrie der bearbeiteten Stirnfläche als auch das Schliffbild der bearbeiteten Stirnfläche individuell und nahezu ohne Fertigungstoleranzen auf den gewünschten Anwendungsfall einzustellen.

## Patentansprüche

1. Vorrichtung zum Ausrichten einer Werkzeugspindel (11), mit einer ersten Platte (19), wobei die Werkzeugspindel (11) mindestens mittelbar an der ersten Platte (45) befestigt ist, mit einer zweiten Platte (47), wobei die zweite Platte (47) mindestens mittelbar an einem Maschinengestell (33) befestigt ist, wobei die erste Platte (45) mittels eines Scharniers (49) drehbar an der zweiten Platte (47) befestigt ist, und mit Mitteln zum Drehen der ersten Platte (45) relativ zur zweiten Platte (47), **dadurch gekennzeichnet, dass** die Mittel zum Drehen der ersten Platte (45) relativ zur zweiten Platte (47) zwei Keilstangen (65, 67) umfassen, dass jede der Keilstangen (65, 67) eine Keilfläche und eine Grundfläche (69, 71) aufweist, dass die Keilflächen beider Keilstangen (65, 67) einander zugewandt angeordnet sind, dass die Grundfläche (69) einer ersten Keilstange (65) an der ersten Platte (45) aufliegt, dass die Grundfläche (71) einer zweiten Keilstange (67) an der zweiten Platte (47) aufliegt, und dass die Keilstangen (65, 67) relativ zueinander verschiebbar sind.

2. Vorrichtung nach Anspruch 1, **dadurch gekennzeichnet, dass** eine der Keilstangen (65, 67) mittels eines Aktors relativ zu der anderen Keilstange (67, 65) verschiebbar ist.

3. Vorrichtung nach Anspruch 2, **dadurch gekennzeichnet, dass** der Aktor eine Gewindespindel (79) umfasst, und dass die Gewindespindel (79) mit einem Gewinde, insbesondere einem Innengewinde einer Keilstange (65) zusammenwirkt.

4. Vorrichtung nach Anspruch 3, **dadurch gekennzeichnet, dass** die Gewindespindel (79) von einem Elektromotor, insbesondere einem Schrittmotor (75) oder einem Drehstrom-Servo-Motor mit einer NC-Achssteuerung, antreibbar ist.

5. Vorrichtung nach Anspruch 4, **dadurch gekennzeichnet, dass** zwischen Gewindespindel (79) und Elektromotor (75) ein Untersetzungsgetriebe, insbesondere ein Planetengetriebe (31) vorgesehen ist.

6. Vorrichtung nach einem der vorhergehenden Ansprüche, **dadurch gekennzeichnet, dass** die erste Platte (45) mindestens einen in Richtung der Drehachse des Scharniers (49) verlaufenden ersten Absatz (51) aufweist, dass die zweite Platte (47) mindestens einen in Richtung der Drehachse des Scharniers verlaufenden zweiten Absatz (53) aufweist, dass die erste Platte (45), der mindestens eine erste Absatz (51), die zweite Platte (47) und der mindestens eine zweite Absatz (53) mindestens einen prismatischen Scharnierkörper (55) umschließen.

7. Vorrichtung nach Anspruch 6, **dadurch gekennzeichnet, dass** der oder die Scharnierkörper (55) zylinderförmig ausgebildet sind.

8. Vorrichtung nach einem der vorhergehenden Ansprüche, **dadurch gekennzeichnet, dass** Federelemente (57) vorgesehen sind, und dass die Federkräfte die erste Platte (45) und die zweite Platte aufeinander zu bewegen.

9. Vorrichtung nach Anspruch 8, **dadurch gekennzeichnet, dass** die Federelemente (57) Druckfedern, insbesondere Tellerfedern (61), und Spannschrauben (59) umfassen, dass die Spannschrauben (59) durch die erste Platte (45) und die zweite Platte (47) hindurchragen, und dass die Druckfedern (61) sich einenends gegen einen Kopf der Spannschrauben (59) und anderenends gegen eine der Platten (45, 47) abstützen.

10. Vorrichtung nach einem der Ansprüche 6 bis 9, **dadurch gekennzeichnet, dass** mindestens ein Federelement (57) im Bereich des Scharniers (49) angeordnet ist, und dass dieses mindestens eine Federelement (57) die erste Platte (45), den mindestens einen ersten Absatz (51), die zweite Platte (47) und den mindestens einen zweiten Absatz (53) in Anlage an dem mindestens einen prismatischen Scharnierkörper (55) halten.

11. Vorrichtung nach einem der vorhergehenden Ansprüche, **dadurch gekennzeichnet, dass** mindestens ein Federelement (57) beabstandet zu dem Scharnier angeordnet ist, und dass dieses mindestens eine Federelement (57) die erste Platte (45) und die zweite Platte (47) in Anlage an den Mitteln zum Drehen der ersten Platte (45) relativ zur zweiten Platte (47) halten.

12. Vorrichtung nach einem der vorhergehenden Ansprüche, **dadurch gekennzeichnet, dass** die Werkzeugspindel (11) in Richtung der X-Achse verfahrbar an der Platte (19) geführt ist (27), und dass ein Antrieb zum Verfahren der Werkzeugspindel (11) in Richtung der X-Achse vorgesehen ist.

13. Vorrichtung nach einem der vorhergehenden Ansprüche, **dadurch gekennzeichnet, dass** der Antrieb zum Verfahren der Werkzeugspindel (11) in Richtung der X-Achse eine Zahnstange (81), ein Ritzel (83), einen Drehantrieb (29) und/oder ein Planetengetriebe (31) umfasst.

## Claims

1. Device for aligning a tool shaft (11), comprising a first plate (19), the tool shaft (11) being fixed at least indirectly to the first plate (45), comprising a second plate (47), the second plate (47) being fixed at least indirectly to a machine frame (33), the first plate (45) being fixed rotatably to the second plate (47) via a hinge (49), and comprising means for rotating the first plate (45) relative to the second plate (47), **characterised in that** the means for rotating the first plate (45) relative to the second plate (47) comprise two wedge bars (65, 67), **in that** each of the wedge bars (65, 67) comprises a wedge surface and a base surface (69, 71), **in that** the wedge surfaces of the two wedge bars (65, 67) are arranged so as to face one another, **in that** the base surface (69) of a first wedge bar (65) lies on the first plate (45), **in that** the base surface (71) of a second wedge bar (67) lies on the second plate (47), and **in that** the wedge bars (65, 67) are displaceable relative to one another.

2. Device according to claim 1, **characterised in that** one of the wedge bars (65, 67) is displaceable relative to the other wedge bar (67, 65) by means of an actuator.

3. Device according to claim 2, **characterised in that** the actuator comprises a threaded shaft (79), and **in that** the threaded shaft (79) cooperates with a thread, in particular an internal thread, of a wedge bar (65).

4. Device according to claim 3, **characterised in that** the threaded shaft (79) can be driven by an electric motor, in particular a stepper motor (75) or a three-phase servo motor with an NC axis control system.

5. Device according to claim 4, **characterised in that** a reduction gear unit, in particular a planetary gear set (31), is provided between the threaded shaft (79) and the electric motor (75).

6. Device according to any one of the preceding claims, **characterised in that** the first plate (45) comprises at least one first recess (51) which extends in the direction of the axis of rotation of the hinge (49), **in that** the second plate (47) comprises at least one second recess (53) which extends in the direction of the axis of rotation of the hinge, and **in that** the first plate (45), the at least one first recess (51), the second plate (47) and the at least one second recess (53) enclose at least one prismatic hinge element (55).

7. Device according to claim 6, **characterised in that** the hinge element or elements (55) are formed in a cylindrical shape.

8. Device according to any one of the preceding claims, **characterised in that** spring elements (57) are provided and **in that** the spring forces move the first plate (45) and the second plate together.

9. Device according to claim 8, **characterised in that** the spring elements (57) comprise compression springs, in particular plate springs (61), and tensioning screws (59), **in that** the tensioning screws (59) protrude through the first plate (45) and the second plate (47), and **in that** one end of the compression springs (61) is supported against a head of the tensioning screws (59) and the other end is supported against one of the plates (45, 47).

10. Device according to any one of claims 6 to 9, **characterised in that** at least one spring element (57) is arranged in the region of the hinge (49), and **in that** this at least one spring element (57) holds the first plate (45), the at least one first recess (51), the second plate (47) and the at least one second recess (53) in contact with the at least one prismatic hinge element (55).

11. Device according to any one of the preceding claims, **characterised in that** at least one spring element (57) is arranged at a distance from the hinge, and **in that** this at least one spring element (57) holds the first plate (45) and the second plate (47) in contact with the means for rotating the first plate (45) relative to the second plate (47).

12. Device according to any one of the preceding claims, **characterised in that** the tool shaft (11) is guided (27) on the plate (19) in such a way as to be displaceable in the direction of the X-axis, and **in that** a drive is provided for displacing the tool shaft (11) in the direction of the X-axis.

13. Device according to any one of the preceding claims, **characterised in that** the drive for displacing the tool shaft (11) in the direction of the X-axis comprises a gear rod (81), a pinion (83), a rotary drive (29) and/or a planetary gear set (31).

## Revendications

1. Dispositif pour orienter une broche porte-outil (11) comportant une première plaque (19), la broche porte-outil (11) étant fixée à la première plaque (45) au moins de manière indirecte, comportant une deuxième plaque (47), la deuxième plaque (47) étant fixée à un châssis de machine (33) au moins de manière indirecte, la première plaque (45) étant montée rotative par rapport à la deuxième plaque (47) au moyen d'une charnière (49), et comportant des moyens permettant l'entraînement en rotation de la première plaque (45) par rapport à la deuxième plaque (47), **caractérisé en ce que** les moyens permettant l'entraînement en rotation de la première plaque (45) par rapport à la deuxième plaque (47) comprennent deux barres trapézoïdales (65, 67), **en ce que** chacune des barres trapézoïdales (65, 67) présente une surface inclinée et une surface de base (69, 71), **en ce que** les surfaces inclinées des deux barres trapézoïdales (65, 67) sont en regard l'une de l'autre, **en ce que** la surface de base (69) d'une première barre trapézoïdale (65) prend appui sur la première plaque (45), **en ce que** la surface de base (71) d'une deuxième barre trapézoïdale (67) prend appui sur la deuxième plaque (47), et **en ce que** les barres trapézoïdales (65, 67) peuvent coulisser l'une par rapport à l'autre.

2. Dispositif selon la revendication 1, **caractérisé en ce que** l'une des barres trapézoïdales (65, 67) peut coulisser par rapport à l'autre barre trapézoïdale (67, 65) au moyen d'un actionneur.

3. Dispositif selon la revendication 2, **caractérisé en ce que** l'actionneur comprend une broche filetée (79) et **en ce que** la broche filetée (79) coopère avec un filetage, notamment un taraudage que présente une barre trapézoïdale (65).

4. Dispositif selon la revendication 3, **caractérisé en ce que** la broche filetée (79) peut être entraînée par un moteur électrique, notamment un moteur pas à pas (75) ou un servomoteur triphasé avec commande d'axes numérique.

5. Dispositif selon la revendication 4, **caractérisé en ce qu'**il est prévu, entre la broche filetée (79) et le moteur électrique (75), un démultiplicateur, notamment un engrenage planétaire (31).

6. Dispositif selon l'une des revendications précédentes, **caractérisé en ce que** la première plaque (45) présente au moins un épaulement (51) s'étendant dans la direction de l'axe de rotation de la charnière (49), **en ce que** la deuxième plaque (47) présente au moins un deuxième épaulement (53) s'étendant dans la direction de l'axe de rotation de la charnière, **en ce que** la première plaque (45), le ou les premier(s) épaulement(s) (51), la deuxième plaque (47) et le ou les deuxième(s) épaulement(s) (53) entourent au moins un corps de charnière en forme de prisme (55).

7. Dispositif selon la revendication 6, **caractérisé en ce que** le ou les corps de charnière (55) sont de forme cylindrique.

8. Dispositif selon l'une quelconque des revendications précédentes, **caractérisé en ce que** sont prévus des éléments formant ressort (57) et **en ce que** les forces de rappel élastique tendent à rapprocher la première plaque (45) de la deuxième plaque.

9. Dispositif selon la revendication 8, **caractérisé en ce que** les éléments formant ressort (57) comportent des ressorts de pression, notamment des rondelles-ressorts (61), et des vis de serrage (59), **en ce que** les vis de serrage (59) traversent la première plaque (45) et la deuxième plaque (47), et **en ce que** les ressorts de pression (61) prennent appui à une extrémité contre une tête des vis de serrage (59) et à l'autre extrémité contre l'une des plaques (45, 47).

10. Dispositif selon l'une des revendications 6 à 9, **caractérisé en ce qu'**au moins un élément formant ressort (57) est disposé dans la région de la charnière (49), et **en ce que** ce ou ces élément(s) formant ressort (57) maintiennent la première plaque (45), le ou les premier(s) épaulement(s) (51), la deuxième plaque (47) et le ou les deuxième(s) épaulement(s) (53) en contact avec le ou les corps de charnière en forme de prisme (55).

11. Dispositif selon l'une quelconque des revendications précédentes, **caractérisé en ce qu'**au moins un élément formant ressort (57) est disposé à distance de la charnière, et **en ce que** ce ou ces élément(s) formant ressort (57) maintiennent la première plaque (45) et la deuxième plaque (47) en contact avec les moyens permettant l'entraînement en rotation de la première plaque (45) par rapport à la deuxième plaque (47).

12. Dispositif selon l'une quelconque des revendications précédentes, **caractérisé en ce que** la broche porte-outil (11) est guidée mobile (27) le long de la plaque (19) dans la direction de l'axe X, et **en ce qu'**il est prévu un dispositif d'entraînement permettant de déplacer la broche porte-outil (11) dans la direction de l'axe X.

13. Dispositif selon l'une quelconque des revendications précédentes, **caractérisé en ce que** le dispositif d'entraînement permettant de déplacer la broche porte-outil (11) dans la direction de l'axe X comprend une crémaillère (81), un pignon (83), un mécanisme d'entraînement en rotation (29) et/ou un engrenage planétaire (31).
